Europäisches Patentamt

European Patent Office

Office européen des brevets

(11) Veröffentlichungsnummer: **0 305 755 B1**

## EUROPÄISCHE PATENTSCHRIFT

(45) Veröffentlichungstag der Patentschrift: **09.12.92**

(21) Anmeldenummer: **88112608.0**

(22) Anmeldetag: **03.08.88**

(51) Int. Cl.⁵: **B65G 43/08**

(54) **Aufgabeförderer zum Aufgeben von Stückgutteilen auf einen Aufnahmeförderer.**

(30) Priorität: **01.09.87 DE 3729081**

(43) Veröffentlichungstag der Anmeldung:
**08.03.89 Patentblatt 89/10**

(45) Bekanntmachung des Hinweises auf die
Patenterteilung:
**09.12.92 Patentblatt 92/50**

(84) Benannte Vertragsstaaten:
**CH DE FR GB IT LI NL**

(56) Entgegenhaltungen:
**DE-A- 2 321 535**
**DE-A- 2 909 292**
**FR-A- 2 550 472**
**GB-A- 2 145 387**

(73) Patentinhaber: **Bernhard Beumer Maschinen-**
**fabrik KG**
**Oelder Strasse 40**
**W-4720 Beckum(DE)**

(72) Erfinder: **Kneuper, Franz-Josef, Dipl.-Ing.**
**Westernkamp 18**
**W-4835 Rietberg 3(DE)**
Erfinder: **Wiesmann, Thomas, Dipl.-Ing.**
**Oststrasse 46**
**W-4720 Beckum(DE)**

(74) Vertreter: **Hoormann, Walter, Dr.-Ing. et al**
**FORRESTER & BOEHMERT Franz-**
**Joseph-Strasse 38**
**W-8000 München 40(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft einen Aufgabeförderer zum jeweils einzelnen Aufgeben von Stückgutteilen auf einen freien Förderplatz eines Aufnahmeförderers, insbesondere eines als Kippschalenförderer od.dgl. ausgebildeten sog. Sorters, dessen Förderrichtung unter einem spitzen Einschleuswinkel zur Förderrichtung des Aufgabeförderers verläuft, mit einer am abgabeseitigen Endabschnitt des Aufgabeförderers vorhandenen Beschleunigungsstrecke, längs welcher ein an einer den Anfang der Beschleunigungsstrecke bildenden Startlinie befindliches Stückgutteil jeweils auf eine vorgegebene Übergabegeschwindigkeit zu beschleunigen ist, wenn ein vom Aufnahmeförderer bzw. dessen Steuereinrichtung zu betätigender Startimpulsgeber bei Annäherung eines freien Förderplatzes an die Übergabestelle einen Startimpuls für den Antrieb des Aufgabeförderers ausgelöst hat, und mit einer der Beschleunigungsstrecke in Förderrichtung vorgeordneten Meßstrecke zum Bestimmen der jeweiligen Stückgutlänge sowie zum Positionieren des Stückgutteils an der Startlinie, wobei die Meßstrecke von mehreren einander in Förderrichtung nachgeordneten, sich über die Förderbahn des Aufgabeförderers erstreckenden Meßlinien wie Lichtschranken od.dgl. gebildet ist, welche mit einer einen Rechner aufweisenden Steuereinrichtung verbunden sind.

Wenn vor- oder nachstehend von einem freien Förderplatz die Rede ist, so ist hierunter ein freier Förderabschnitt des Aufnahmeförderers zu verstehen, dessen Länge zur Aufnahme des jeweils aufzunehmenden Stückgutteils ausreicht. Handelt es sich um ein relativ kurzes Stückgutteil, so kann der betreffende Förderplatz des Aufnahmeförderers mithin kleiner sein als bei einem relativ langen Stückgutteil. Handelt es sich bei dem Aufnahmeförderer um einen Kippschalenförderer od.dgl., so bedeutet der Begriff "freier Förderplatz" mithin eine freie Förderschale, wenn die Länge des aufzugebenden Stückgutteils kleiner als die Schalenlänge ist. Ist bei einem derartigen Aufnahmeförderer die Stückgutlänge größer als eine Förderschale, jedoch kleiner als die Länge von zwei Förderschalen, so ist ein "freier Förderplatz" dann vorhanden, wenn sich der Übergabestelle zwei unmittelbar aufeinander folgende leere Kippschalen nähern, da in einem solchen Falle das aufzugebende Stückgutteil üblicherweise auf zwei Förderschalen plaziert wird. Ist dagegen die Länge eines Stückgutteils noch größer, so wird ein derartiges Stückgutteil mit Überlänge üblicherweise nicht auf den Aufnahmeförderer aufgegeben, sondern i.a. von Hand von dem Aufgabeförderer abgenommen und auf andere Weise seiner Zielstelle zugeführt, da es bei überlangen Stückgutteilen anderenfalls schon bei der Übergabe auf den Aufnahmeförderer zu Schwierigkeiten kommen kann.

Demgemäß ist es erforderlich, die Stückgutlänge bereits auf dem Aufgabeförderer insoweit zu bestimmen, und zwar nach drei Längenkategorien, die unabhängig von der konkreten Ausbildung des Aufnahmeförderers nachstehend der Einfachheit halber als Einschalenlänge bzw. Zweischalenlänge bzw. Überlänge bezeichnet werden, wobei mithin ein Stückgutteil Einschalenlänge aufweist, wenn seine Länge kleiner als ein systembedingter, vorgegebener Wert ist, der bei einem Kippschalenförderer im wesentlichen gleich der Länge einer Förderschale ist, und ein Stückgutteil Zweischalenlänge aufweist, wenn seine Länge größer als Einschalenlänge, jedoch kleiner als ein systembedingter Wert ist, der bei einem Kippschalenförderer im wesentlichen der doppelten Länge einer Förderschale entspricht, und wobei ein Stückgutteil Überlänge aufweist, wenn es länger als die Zweischalenlänge ist.

Für die erforderliche Längenbestimmung ist der Aufgabeförderer i.a. mit einer aus mehreren einander in Förderrichtung nachgeordneten Lichtschranken od.dgl. als sich über seine Förderbahn erstreckende Meßlinien versehen, die jeweils ein Signal an die Steuereinrichtung abgeben, wenn sie von einem Stückgutteil durchsetzt bzw. wieder frei werden, wobei eine der Meßlinien zugleich dazu benutzt werden kann, um ein auf den Aufnahmeförderer aufzugebendes Stückgutteil an der Startlinie der der Meßstrecke nachgeordneten Beschleunigungsstrecke zu positionieren, wie dieses weiter unten noch beschrieben ist.

Es sei noch darauf verwiesen, daß die vorgegebene Übergabegeschwindigkeit höchst bevorzugt derart ist, daß ihre an der Übergabestelle in Förderrichtung des Aufnahmeförderers gerichtete Geschwindigkeitskomponente gleich der Fördergeschwindigkeit des Aufnahmeförderers ist, so daß ein Stückgutteil in Förderrichtung des Aufnahmeförderers ohne Schlupf auf diesen übergeben und demgemäß sehr genau plaziert werden kann, wie dieses in der DE-PS 29 09 292 beschrieben und für eine optimale Ausnutzung des Aufnahmeförderers und einen sicheren Betrieb höchst wünschenswert ist.

Bei dem in der DE-PS 29 09 292 beschriebenen Aufgabeförderer verläuft die den Anfang der Beschleunigungsstrecke bildende Startlinie rechtwinklig zu seiner Förderrichtung. Da die Beschleunigung eines Stückgutteils unabhängig von seiner Plazierung relativ zur Mittellinie des Aufgabeförderers stets in gleicher Weise erfolgt, hat dieses zur Folge, daß ein Stückgutteil, welches - in Förderrichtung gesehen - weiter rechts an der Startlinie des Aufgabeförderers angeordnet ist, den Aufnahmeförderer an einem anderen Längenabschnitt erreicht als ein weiter links an der Startlinie angeordnetes Stückgutteil. Im letztgenannten Falle ist nämlich ersichtlich das vorderste Ende des auf den Aufnahmeförderer übergebenen Stückgutteils bei Erreichen seiner Position auf dem Aufnahmeförderer relativ zu der entsprechenden Position eines weiter rechts auf dem Aufgabeförderer angeordneten Stückgutteils entgegen der Förderrichtung des Aufnahmeförderers versetzt und weist mithin im Falle eines Kippschalenförderers od.dgl. einen größeren Abstand zu der Vorderkante der beschickten Förderschale auf als ein weiter rechts auf dem Aufgabeförderer angeordnetes Stückgutteil. Dieses ist im Hinblick auf die Ausnutzung freier Förderplätze und damit die Kapazität der Gesamtanlage ungünstig, wenn ein aufzugebendes Stückgutteil relativ weit zum linken Rand des Aufgabeförderers versetzt angeordnet ist und eine Grenzlänge aufweist, die bei rechtsseitiger Plazierung auf dem Aufgabeförderer an sich noch als Einschalenlänge (bzw. Zweischalenlänge) zu behandeln wäre, die jedoch bei einer verschobenen Plazierung auf dem Aufnahmeförderer entgegen dessen Förderrichtung für eine Schale (bzw. zwei Schalen) zu groß ist, so daß nach einer entsprechenden Feststellung zugewartet werden muß, bis ein freier Förderplatz mit Zweischalenlänge sich der Übergabestelle nähert bzw. eine Qualifizierung der Stückgutlänge als Überlänge erfolgt, obwohl dieses bei optimaler Plazierung nicht erforderlich wäre.

Um diesen Nachteil zu vermeiden, hat man daher auch bereits die Startlinie der Beschleunigungsstrecke rechtwinklig zur Förderrichtung des Aufnahmeförderers (und damit in einem spitzen Winkel zur Förderrichtung des Aufgabeförderers) angeordnet und demgemäß auch die parallel zur Startlinie verlaufenden Meßlinien der Meßstrecke im rechten Winkel zur Förderrichtung des Aufnahmeförderers verlaufen lassen. Eine solche Ausbildung führt zwar dazu, daß ein auf den Aufnahmeförderer übergebenes Stückgutteil auf diesem stets so plaziert wird, daß sein vorderes Ende unabhängig von seiner relativen Seitenlage zur Mittellinie des Aufgabeförderers stets auf einer rechtwinklig zur Förderrichtung des Aufnahmeförderers verlaufenden Linie liegt (die im Falle eines Kippschalenförderers dann zweckmäßigerweise unmittelbar benachbart zur Vorderkante der zu beschickenden Förderschale verläuft), doch weist dieser bekannte Aufgabeförderer den großen Nachteil auf, daß sich seine Meßstrecke aufgrund der spitzwinklig zur Förderrichtung des Aufgabeförderers verlaufenden Meßlinien über einen großen Abschnitt der Förderstrecke des Aufgabeförderers erstreckt. Das hat nun aber bei sonst gleichen Verhältnissen zwangsläufig eine entsprechend geringe Durchsatzleistung des Aufgabeförderers zur Folge, da ein weiteres Stückgutteil erst dann in die Meßstrecke einlaufen kann, wenn das vorhergehende Stückgutteil übergeben worden ist und bei dem bei dieser bekannten Ausführung erforderlichen relativ großen Stückgutabstand mithin bei gleicher Fördergeschwindigkeit nur eine entsprechend verminderte Durchsatzleistung realisierbar ist.

Der vorliegenden Erfindung liegt die Aufgabe zugrunde, einen gattungsgemäßen Aufgabeförderer mit möglichst kurzer erforderlicher Länge zu schaffen, mit dem bei großer Durchsatzleistung zugleich sicherzustellen ist, daß das vordere Ende eines auf den Aufnahmeförderer aufzugebenden Stückgutteils unabhängig von dessen seitlicher Relativlage zur Mittellinie des Aufgabeförderers stets im wesentlichen auf einer rechtwinklig zur Förderrichtung des Aufgabeförderers verlaufenden, gedachten vorgegebenen Linie liegt.

Als Lösung dieser Aufgabe ist erfindungsgemäß vorgesehen, daß die Meßstrecke durch insgesamt lediglich zwei Meßlinien gebildet ist, die in einem spitzen Winkel zueinander verlaufen.

Wie weiter unten noch im einzelnen dargelegt ist, reicht eine aus lediglich zwei Meßlinien gebildete Meßstrecke zur Erfüllung der ihr zugewiesenen Funktionen überraschenderweise aus, wobei durch die V-förmige Meßlinienanordnung ersichtlich eine (in Förderrichtung des Aufgabeförderers gemessene) extrem kurze Längserstreckung der Meßstrecke zu erzielen und eine entsprechend enge Stückgutfolge zu realisieren ist, was bei gleichen Geschwindigkeitsverhältnissen zu der erstrebten höheren Durchsatzleistung als bei einer Ausbildung mit zueinander parallelen, rechtwinklig zur Förderrichtung des Aufnahmeförderers verlaufenden Meßlinien führt, von denen bei dem bekannten gattungsgemäßen Aufgabeförderer drei mit gegenseitigem Abstand angeordnete, parallele Meßlinien vorhanden sind, die mithin zu einer relativ langen Meßstrecke führen.

Bei einer bevorzugten Ausgestaltung, bei welcher die Meßstrecke besonders kurz ausgebildet sein kann, verläuft die eine Meßlinie - und zwar bevorzugt die zunächst von einem Stückgutteil erreichte erste Meßlinie - in an sich bekannter Weise rechtwinklig zur Förderrichtung des Aufgabeförderers. Verläuft bei dieser Ausgestaltung die andere (zweite) Meßlinie rechtwinklig zur Förderrichtung des Aufnahmeförderers, so schließen die beiden Meßlinien mithin einen Winkel ein, der gleich dem Einschleuswinkel zwischen den Förderrichtungen des Aufgabe- und des Aufnahmeförderers ist.

Zur Berücksichtigung der relativ zur Mittellinie des Aufgabeförderers erfolgten seitlichen Verschiebung eines auf den Aufgabeförderer gegebenen Stückgutteils ist bevorzugt vorgesehen, daß die von der Vorderkante bzw. einer vorderen Ecke eines Stückgutteils zunächst erreichte erste Meßlinie mit einer von einem Taktgeber gesteuerten Zähleinrichtung zusammenwirkt, die bei Erreichen bzw. beim Durchsetzen der ersten Meßlinie durch das vorderste Ende des Stückgutteils eingeschaltet wird, und deren Zählerstand bei Erreichen der zweiten Meßlinie durch das vorderste Ende des Stückgutteils im Rechner mit einem vorgegebenen Vergleichswert verglichen wird, und daß das Einschalten des Antriebes des Aufgabeförderers nach dessen Aktivierung durch den vom Aufnahmeförderer ausgelösten Startimpuls gemäß der Differenz aus dem Vergleichswert und dem Zählerstand bei Erreichen der zweiten Meßlinie durch eine Verzögerungseinrichtung verzögert wird. Befindet sich mithin bei einer rechtwinklig zur Förderrichtung des Aufgabeförderers verlaufenden ersten Meßlinie und einer rechtwinklig zur Förderrichtung des Aufnahmeförderers verlaufenden zweiten Meßlinie ein Stückgutteil an dem Randbereich des Aufgabeförderers, an dem die beiden Meßlinien konvergieren, so ist die von der Verzögerungseinrichtung bewirkte Verzögerung des Einschaltens des Antriebes des Aufgabeförderers nach Erhalt des Startimpulses größer als bei einem Stückgutteil, welches weiter zur anderen Seite des Aufgabeförderers hin plaziert ist, und diese Verzögerung ist für ein am gegenüberliegenden Randabschnitt des Aufgabeförderers angeordnetes Stückgutteil am kleinsten (sie kann dort ggf. Null sein), wobei die Größe der vorzunehmenden Verzögerung ohne weiteres errechenbar oder aber empirisch zu ermitteln ist. Der Basisgedanke einer solchen Anordnung besteht mithin darin, daß der von der Zähleinrichtung zwischen der ersten Meßlinie und der zweiten Meßlinie durch das Stückgutteil zurückgelegte Weg ermittelt und als Maß für den seitlichen Versatz eines auf dem Aufgabeförderer befindlichen Stückgutteils realtiv zur Mittellinie bzw. einem Rand des Aufgabeförderers benutzt wird, und daß das so ermittelte Maß dann von der Steuereinrichtung in eine entsprechende Verzögerungszeit für das Einschalten des Aufgabefördererantriebes nach Erhalt des Startimpulses verwendet wird, so daß auf diese Weise sicherzustellen ist, daß das vorderste Ende eines auf den Aufnahmeförderer übergebenen Stückgutteils im wesentlichen stets auf einer vorgegebenen, rechtwinklig zur Förderrichtung des Aufnahmeförderers verlaufenden Linie liegt und demgemäß ein freier Förderplatz des Aufnahmeförderers optimal zu nutzen ist.

Da bei der vorstehend beschriebenen Ausbildung der von der Zähleinrichtung zwischen den beiden Meßlinien gezählte Wert am kleinsten ist, wenn die größte Verzögerung vorgesehen werden soll und umgekehrt, weist die mit der ersten Meßlinie zusammenwirkende Zähleinrichtung bevorzugt zwei jeweils von einem Taktgeber gesteuerte Zähler auf, die jeweils bei Erreichen bzw. beim Durchsetzen der ersten Meßlinie durch ein Stückgutteil eingeschaltet werden, wobei der eine (erste) Zähler bei Erreichen bzw. beim Durchsetzen der zweiten Meßlinie durch das vorderste Ende des betreffenden Stückgutteils abgeschaltet und sein Zählerstand im Rechner gespeichert wird, und wobei der zweite Zähler bei Erreichen eines vorgegebenen Zählerstandes einen Stoppimpuls für den Antrieb des Aufgabeförderers auslöst, so daß das Stückgutteil - ggf. nach einem Bremsen - an der Startlinie der Beschleunigungsstrecke positioniert wird. Mit einer derartigen Ausbildung läßt sich nämlich eine noch zweckmäßigere Steuerung der Verzögerungseinrichtung erzielen, und zwar dadurch, daß die Steuereinrichtung einen Differenzbildner aufweist, mittels dessen die Differenz aus dem vom zweiten Zähler gezählten Endwert und dem vom ersten Zähler ermittelten Endwert gebildet wird, wobei dann die Verzögerungseinrichtung für den Antrieb des Aufgabeförderers von dem Differenzbildner gesteuert wird. Der Differenzbildner zeigt mithin dort, wo eine längere Verzögerung erfolgen soll, einen größeren Wert an als an den Stellen des Aufgabeförderers, an denen die Verzögerung nur geringer zu sein braucht, und erzeugt mithin ein Steuersignal, welches nach entsprechender Eichung unmittelbar verwertbar ist.

Um mit dem erfindungsgemäßen Aufgabeförderer trotz der aus nur zwei Meßlingen bestehenden Meßstrecke eine Bestimmung der Stückgutlänge nach den drei oben definierten Längenkategorien vornehmen zu können, kann der Rechner einen zweiten Vergleicher aufweisen, mit dem beim Freiwerden der ersten Meßlinie durch die Hinterkante bzw. das hinterste Ende des Stückgutteils der vorhandene Zählerstand des zweiten Zählers der Zähleinrichtung nacheinander mit zwei gespeicherten, systembedingten Bezugswerten zu vergleichen ist, die ohne weiteres rechnerisch zu ermitteln bzw. empirisch zu bestimmen sind, wobei deren Größe der Länge eines einzelnen Förderplatzes bzw. eines doppelten Förderplatzes des Aufnahmeförderers entspricht, und der Vergleicher ein entsprechendes Signal an die Steuereinrichtung des Aufnahmeförderers gibt. Stellt dabei der Vergleicher fest, daß die Länge des Stückgutteils höchstens der Länge eines Förderplatzes entspricht, so gibt er an die Steuereinrichtung des Aufnahmeförderers ein Einschalenlänge-Signal. Hierdurch wird bewirkt, daß der Aufnahmeförderer einen Startimpuls an die Steuereinrichtung des Aufgabeförderers gibt, wenn sich ein entsprechender freier Förderplatz (bei einem Kippschalenförderer od.dgl. also eine freie Förderschale) der Übergabestelle nähert. Stellt dagegen der zweite Vergleicher fest, daß die Länge eines Stückgutteils größer als Einschalenlänge, jedoch kleiner als Überlänge ist, so erhält die Steuereinrichtung des Aufnahmeförderers ein entsprechendes Signal und gibt einen Startimpuls erst dann an die Steuereinrichtung des Aufgabeförderers ab, wenn sich ein freier Förderplatz des Aufnahmeförderers der Übergabestelle nähert, der (wenigstens) Zweischalenlänge aufweist. Stellt der zweite Vergleicher dagegen fest, daß der Zählerstand des zweiten Zählers größer als der zweite gespeicherte Bezugswert ist und das Stückgutteil mithin Überlänge aufweist, so wird kein Startimpuls vom Aufnahmeförderer ausgelöst und das betreffende Stückgutteil wird nicht übergeben, sondern auf andere Weise seiner Zielstelle zugeführt. Letzteres ist auch dann der Fall, wenn die erste Meßlinie bis zum Erreichen des Abschaltimpulses für den Antrieb des Aufgabeförderers noch nicht wieder freigeworden ist.

Bevorzugte Ausgestaltungen der vorliegenden Erfindung sind in Unteransprüchen beschrieben.

Die Erfindung ist nachstehend an einem Ausführungsbeispiel unter Bezugnahme auf eine schematische Zeichnung weiter erläutert.

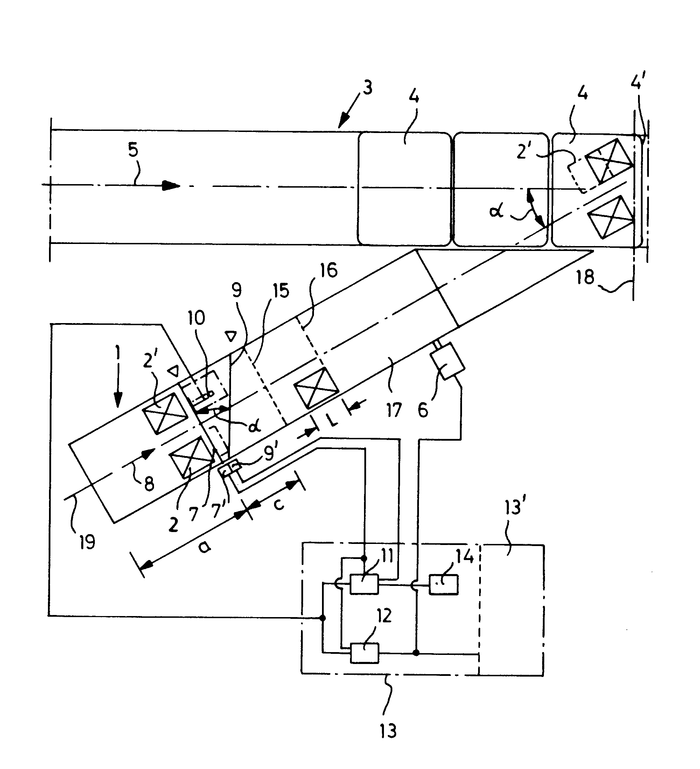

Die Zeichnung zeigt in einer schematischen Darstellung eine Draufsicht auf einen im ganzen mit 1 bezeichneten Aufgabeförderer zum jeweils einzelnen Aufgeben von Stückgutteilen 2 auf einen freien Förderplatz eines Aufnahmeförderers 3, der als sog. Sorter eingesetzt ist, um ein Stückgutteil 2 jeweils an einer vorgegebenen Abgabestelle abzugeben. Zu diesem Zweck ist der Aufnahmeförderer 3 als Kippschalenförderer ausgebildet, dessen Förderschalen 4 (von denen in der Zeichnung lediglich drei Förderschalen angedeutet sind) jeweils seitlich zur Förderrichtung 5 des Aufnahmeförderers 3 kippbar sind.

Der Aufgabeförderer 1 ist unter einem spitzen Einschleuwinkel $\alpha$ zum Aufnahmeförderer 3 derart angeordnet, daß sein Fördertrum in derselben Horizontalebene verläuft wie die Tragflächen der Förderschalen 4. Der Aufgabeförderer 1, der als Gurtförderer ausgebildet sein kann, ist mittels eines Antriebes 6 antreibbar.

Mit einem Abstand a zum aufgabeseitigen Ende des Aufgabeförderers 1 ist an dessen Obertrum eine von einer Lichtschranke 7 gebildete erste Meßlinie vorhanden, die rechtwinklig zur Förderrichtung 8 des Aufgabeförderers 1 verläuft. Der Lichtschranke 7 ist in Förderrichtung 8 eine weitere Lichtschranke 9 nachgeordnet, die eine zweite Meßlinie bildet und in einem spitzen Winkel $\alpha$ zur Lichtschranke 7 verläuft, der gleich dem Einschleuwinkel $\alpha$ ist, so daß die die zweite Meßlinie bildende Lichtschranke 9 rechtwinklig zur Förderrichtung 5 des Aufnahmeförderers 3 gerichtet ist.

Mit dem Fördertrum des Aufgabeförderers 1 wirkt ein Rotationsimpulsgeber 10 zusammen, dessen Impulse inkrementalen Wegstrecken entsprechen, welche das Fördertrum des Aufgabeförderers 1 bei eingeschalteten Antrieb 6 zurücklegt. Der Rotationsimpulsgeber 10 dient als Taktgeber für einen ersten Zähler 11 und einen zweiten Zähler 12 der Steuereinrichtung 13 für den Aufgabeförderer 1.

Wird ein Stückgutteil 2 auf den Aufgabeförderer 1 aufgegeben, um es auf eine freie Förderschale 4 des Aufnahmeförderers 3 einzuschleusen, an dem mehrere Aufgabeförderer 1 angeordnet sind, so erreicht das Stückgutteil 2 - bei eingeschaltetem Antrieb 6 - zunächst die von der Lichtschranke 7 gebildete erste Meßlinie. Sobald die Vorderkante (bzw. eine vordere Ecke) des Stückgutteils 2 die erste Meßlinie 7 durchsetzt, wird durch den Empfänger 7' der Lichtschranke 7 ein Signal ausgelöst, welches die Zähler 11 und 12 einschaltet, so daß diese die von dem Rotationsimpulsgeber 10 als Taktgeber erzeugten Impulse zählen.

Durchsetzt das Stückgutteil 2 danach die als zweite Meßlinie wirksame Lichtschranke 9, so löst der Empfänger 9' der Lichtschranke 9 einen Schaltimpuls aus, der zum Abschalten des ersten Zählers 11 führt. Der zu diesem Zeitpunkt erreichte Zählerstand des ersten Zählers 11 wird in einem Speicher 14 der Steuereinrichtung 13 gespeichert.

Bei Erreichen eines vorgegebenen Zählerstandes Z15, der dann erreicht ist, wenn die Vorderkante des Stückgutteils 2 die in der Zeichnung punktiert dargestellte, rechtwinklig zur Förderrichtung 8 verlaufende Stopplinie 15 erreicht hat, wird durch ein von der Steuereinrichtung 13 ausgelöstes Stoppsignal der Antrieb 6 des Aufgabeförderers 1 abgeschaltet und der Aufgabeförderer 1 definiert gebremst, so daß das Stückgutteil 2 mit seiner Vorderkante an einer Startlinie 16 plaziert wird, welche den Anfang einer Beschleunigungsstrecke 17 bildet.

Nähert sich der Übergabestelle ein freier Förderplatz, auf dem das aufzugebende Stückgutteil 2 aufgenommen werden kann, so gibt ein Startimpulsgeber des Aufnahmeförderers 3 einen Startimpuls an den Antrieb 6 des Aufgabeförderers 1. Sobald der Antrieb 6 eingeschaltet worden ist, wird das Stückgutteil 2 aus seiner vor der Startlinie 16 befindlichen Startposition auf eine vorgegebene Übergabegeschwindigkeit beschleunigt, deren in Förderrichtung 5 des Aufnahmeförderers 3 gerichtete Komponente an der Übergabestelle gleich der Fördergeschwindigkeit des Aufnahmeförderers 3 ist, so daß das Stückgutteil 2 in dieser Richtung schlupffrei auf den Aufnahmeförderer 3 zu übergeben ist und auf diesem derart plaziert wird, daß seine in Förderrichtung 5 des Aufnahmeförderers 3 vornliegende Ecke an einer rechtwinklig zur Förderrichtung 5 verlaufenden Linie 18 liegt, die benachbart zur Vorderkante 4' der betreffenden Förderschale 4 verläuft.

Wenn das Stückgutteil nicht in der rechts zur Mittellinie 19 des Aufgabeförderers 1 versetzten Position auf den Aufgabeförderer 1 aufgegeben wird, sondern weiter nach links, also beispielsweise in einer nach links versetzten Randlage, wie diese in der Zeichnung mit 2' bezeichnet ist, so würde sich zwar der gleiche Vorgang abspielen, wie er vorstehend beschrieben ist, doch würde das links zur Mittellinie 19 versetzt angeordnete Stückgutteil 2' auf dem Aufnahmeförderer 3 in der mit gepunkteten Linien angedeuteten Stellung positioniert werden, da es von der rechtwinklig zur Förderrichtung 8 des Aufgabeförderers 1 verlaufenden Startlinie 16 aus (die zwangsläufig parallel zur ersten Meßlinie 7 verläuft) um die gleiche Strecke in Richtung auf den Aufnahmeförderer 3 vorwärtsbewegt wird. Dieses hätte zur Folge, daß seine in Förderrichtung 5 des Aufnahmeförderers 3 vornliegende Ecke nach erfolgter Plazierung nicht auf der Linie 18 liegen würde, sondern mit einem größeren Abstand zu dieser. Dieses ist unschädlich, wenn die Länge L des Stückgutteils im Verhältnis zur Länge einer Förderschale 4 klein ist. Liegt die Länge L eines Stückgutteils aber in der Größenordnung der Länge einer Förderschale 4, so könnte es aufgrund seiner beschriebenen Positionierung mithin nicht von einer einzelnen Förderschale 4 aufgenommen werden, sondern es wären zwei Förderschalen erforderlich. Demgemäß müßte mit der Übergabe so lange zugewartet werden, bis sich ein aus zwei aufeinanderfolgenden, leeren Förderschalen 4 bestehender Förderplatz der Übergabestelle nähert. Dieses ist aber für die angestrebte optimale Ausnutzung der gesamten Förderanlage ungünstig. Aus diesem Grunde sind erfindungsgemäß Maßnahmen vorgesehen, die sicherstellen, daß Stückgutteile 2', die auf dem Aufgabeförderer 1 weiter nach links versetzt angeordnet sind als das Stückgutteil 2, ebenfalls so auf dem Aufnahmeförderer 3 plaziert werden, daß ihre in Förderrichtung 5 des Aufnahmeförderers 3 vornliegende Ecke auf der zur Vorderkante 4' der betreffenden Förderschale 4 benachbarten Linie 18 liegt. Dieses wird dadurch erreicht, daß der Antrieb 6 des Aufgabeförderers 1 nach Erhalt eines Startimpulses vom Aufnahmeförderer 3 mit unterschiedlicher zeitlicher Verzögerung eingeschaltet wird.

Zu diesem Zweck weist die Steuereinrichtung 13 des Aufgabeförderers 1 einen Differenzbildner auf, der Bestandteil eines Rechners 13' der Steuereinrichtung 13 ist. Mittels des Differenzbildners wird die Differenz aus dem vom zweiten Zähler 12 gezählten, vorgegebenen Endwert Z15 und dem vom ersten Zähler 11 ermittelten Endwert Z9 ermittelt (wobei der Zählerstand Z9 erreicht ist, wenn das Stückgutteil die zweite Meßlinie 9 erreicht hat und durchsetzt). Diese Differenz ist ersichtlich bei einem weiter nach rechts auf dem Aufgabeförderer 1 angeordneten Stückgutteil 2 größer als bei einem weiter nach links auf dem Aufgabeförderer 1 angeordneten Stückgutteil 2' und ergibt demgemäß eine unmittelbar zum Steuern der Verzögerungseinrichtung für den Antrieb 6 verwendbare Steuergröße, da der Antrieb 6 bei einem weiter nach rechts auf dem Aufgabeförderer 1 angeordneten Stückgutteil 2 nach Auslösen des Startimpulses stärker verzögert eingeschaltet werden muß als bei einem weiter nach links angeordneten Stückgutteil 2', wenn das Stückgutteil jeweils bei Plazierung auf dem Aufnahmeförderer 3 mit seinem vornliegenden Ende an der Linie 18 angeordnet sein soll.

Die aus den beiden Lichtschranken 7, 9 gebildete Meßeinrichtung, deren in Förderrichtung 8 des Aufgabeförderers 1 gemessene Länge c ersichtlich sehr klein sein kann, dient aber nicht nur dazu, die Plazierung eines Stückgutteils 2 bzw. 2' an der Startlinie 16 der Beschleunigungsstrecke 17 sowie die vorstehend beschriebene Verzögerungskorrektur für den Antrieb 6 zu bewirken, sondern sie dient darüber hinaus auch zur Längenbestimmung des jeweils auf den Aufnahmeförderer 3 aufzugebenden Stückgutteils nach den drei üblichen Längenkategorien Einschalenlänge, Zweischalenlänge oder Überlänge. Um trotz dieser drei unterschiedlichen Längenkategorien mit zwei Meßlinien - also den Lichtschranken 7 und 9 - auszukommen und dabei eine möglichst kurze Meßstreckenlänge c verwirklichen zu können, weist der Rechner 13' einen zweiten Vergleicher auf, mit dem beim Freiwerden der ersten Meßlinie 7 durch die Hinterkante des Stückgutteils 2 der aktuelle Zählerstand des zweiten Zählers 12 nacheinander mit zwei im Rechner 13' gespeicherten, systembedingten Bezugswerten zu vergleichen ist, deren Größe Einschalenlänge bzw. Zweischalenlänge entsprechen. Ist der nach dem Freiwerden der ersten Meßlinie 7 vom zweiten Zähler 12 ermittelte, an den Rechner 13' weitergeleitete Zählerwert kleiner als der erste Bezugswert, so wird ein entsprechendes Signal an die Steuereinrichtung des Aufnahmeförderers 3 gegeben und diese löst einen Startimpuls aus, sobald sich eine freie Förderschale 4 der Übergabestelle nähert. Ist dagegen der vom zweiten Zähler 12 ermittelte Wert zwar größer als der erste Bezugswert, aber kleiner als der zweite Bezugswert, so erhält die Steuereinrichtung des Aufnahmeförderers 3 ein entsprechendes Zweischalenlänge-Signal und löst einen Startimpuls nur dann aus, wenn sich der Übergabestelle 2 unmittelbar aufeinanderfolge leere Förderschalen 4 nähern. Ist schließlich der vom zweiten Zähler 12 ermittelte Wert größer als die zweite Bezugsgröße oder ist die die erste Meßlinie bildende Lichtschranke 7 noch nicht wieder freigeworden, wenn der Zählerwert Z15 erreicht ist, bei dem der Antrieb 6 des Aufgabeförderers 1 einen Abschaltbefehl erhält, so handelt es sich um ein Stückgutteil 2 mit Überlänge. In diesem Falle wird kein Startimpuls für den Aufnahmeförderer 3 ausgelöst, sondern ggf. ein Überlänge-Warnsignal und das Stückgutteil mit Überlänge wird vom Aufgabeförderer 1 abgenommen und auf andere Weise seiner Zielstelle zugeführt.

Es ist erkennbar, daß mit der erfindungsgemäßen Ausbildung eine Meßstrecke sehr geringer Länge c zu realisieren ist, so daß die Stückgutfolge entsprechend enger sein kann als dieses bei bekannten Aufgabeförderern der Fall ist und demgemäß bei gleichen Geschwindigkeitsverhältnissen eine größere Durchsatzleistung zu verwirklichen ist. Dabei wird dennoch sichergestellt, daß ein auf den Aufnahmeförderer 13 aufgegebenes Stückgutteil jeweils in für die Ausnutzung des Aufnahmeförderers 3 optimaler Weise auf dem Aufnahmeförderer 3 zu plazieren ist, und es können darüber hinaus auf relativ einfache Art und Weise durch die nur aus zwei Meßlinien bestehende Meßstrecke auch die übrigen Funktionen des Plazierens eines Stückgutteils an der Startlinie sowie der Längenbestimmung durchgeführt werden.

**Patentansprüche**

1.  Aufgabeförderer (1) zum jeweils einzelnen Aufgeben von Stückgutteilen auf einen freien Förderplatz eines Aufnahmeförderers (3), insbesondere eines als Kippschalenförderer od.dgl. ausgebildeten Sorters, dessen Förderrichtung (5) unter einem spitzen Einschleuswinkel zur Förderrichtung (8) des Aufgabeförderers verläuft, mit einer am abgabeseitigen Endabschnitt des Aufgabeförderers vorhandenen Beschleunigungsstrecke (17), längs welcher ein an einer den Anfang der Beschleunigungsstrecke bildenden Startlinie (16) befindliches Stückgutteil auf eine vorgegebene Übergabegeschwindigkeit zu beschleunigen ist, wenn ein Startimpulsgeber des Aufnahmeförderers einen Startimpuls für den Antrieb (6) des Aufgabeförderers ausgelöst hat und mit einer der Beschleunigungsstrecke in Förderrichtung vorgeordneten Meßstrecke zum Bestimme der jeweiligen Stückgutlänge sowie zum Positionieren des Stückgutteils an der Startlinie, wobei die Meßstrecke von mehreren einander in Förderrichtung nachgeordneten, sich über die Förderbahn des Aufgabeförderers erstreckenden Meßlinien (7, 9) wie Lichtschranken od.dgl. gebildet ist, welche mit einer einen Rechner (13') aufweisenden Steuereinrichtung (13) verbunden sind, dadurch gekennzeichnet, daß die Meßstrecke durch zwei in einem spitzen Winkel (α) zueinander verlaufende Meßlinien (7, 9) gebildet ist.

2.  Aufgabeförderer nach Anspruch 1, dadurch gekennzeichnet, daß eine Meßlinie (7) in an sich bekannter Weise rechtwinklig zur Förderrichtung (8) des Aufgabeförderers (1) verläuft.

3.  Aufgabeförderer nach Anspruch 2, dadurch gekennzeichnet, daß die von einem Stückgutteil (2) zunächst erreichte erste Meßlinie (7) rechtwinklig zur Förderrichtung (8) des Aufgabeförderers (1) verläuft.

4.  Aufgabeförderer nach einem oder mehreren der vorhergehenden Ansprüche, dadurch gekennzeichnet, daß eine Meßlinie (9) in an sich bekannter Weise rechtwinklig zur Förderrichtung (5) des Aufnahmeförderers (3) verläuft.

5.  Aufgabeförderer nach Anspruch 3 und 4, dadurch gekennzeichnet, daß der von den beiden Meßlinien (7, 9) eingeschlossene Winkel α gleich dem Einschleuswinkel (α) zwischen den Förderrichtungen (8 bzw. 5) des Aufgabeförderers (1) und des Aufnahmeförderers (3) ist.

6.  Aufgabeförderer nach einem oder mehreren der vorhergehenden Ansprüche, dadurch gekennzeichnet, daß die von der Vorderkante eines Stückgutteils (2) zunächst erreichte erste Meßlinie (7) mit einer von einem Taktgeber (10) gesteuerten Zähleinrichtung (11, 12) zusammenwirkt, die bei Erreichen der ersten Meßlinie (7) durch das Stückgutteil (2) eingeschaltet wird, und deren Zählerstand bei Erreichen der zweiten Meßlinie (9) durch das Stückgutteil (2) im Rechner (13') der Steuereinrichtung (13) mit einem vorgegebenen Vergleichswert verglichen wird; und daß das Einschalten des Antriebes (6) des Aufgabeförderers (1) nach dessen Aktivierung durch den vom Aufnahmeförderer (3) ausgelösten Startimpuls gemäß der Differenz aus dem Vergleichswert und dem Zählerstand bei Erreichen der zweiten Meßlinie (9) durch eine Verzögerungseinrichtung zu verzögern ist.

7.  Aufgabeförderer nach Anspruch 6, dadurch gekennzeichnet, daß die mit der ersten Meßlinie (7) zusammenwirkende Zähleinrichtung zwei jeweils von einem Taktgeber (10) gesteuerte Zähler (11, 12) aufweist, die jeweils bei Erreichen der ersten Meßlinie (7) durch die Vorderkante eines Stückgutteils (2) eingeschaltet werden, wobei der eine (erste) Zähler (11) bei Erreichen der zweiten Meßlinie (9) durch das betreffende Stückgutteil (2) abgeschaltet und sein Zählerstand im Rechner (13') gespeichert wird, und wobei der zweite Zähler (12) bei Erreichen eines vorgegebenen Zählerstandes (Z15) einen Stoppimpuls für den Antrieb (6) des Aufgabeförderers (1) auslöst.

8. Aufgabeförderer nach Anspruch 7, dadurch gekennzeichnet, daß die Steuereinrichtung (13) einen Differenzbildner aufweist, mittels dessen die Differenz aus dem vom zweiten Zähler (12) gezählten, vorgegebenen Endwert (Z15) und dem vom ersten Zähler (11) ermittelten Endwert (Z9) bei Erreichen der zweiten Meßlinie (9) durch das Stückgutteil (2) gebildet wird, und daß die Verzögerungseinrichtung für den Antrieb (6) des Aufgabeförderers (1) von dem Differenzbildner gesteuert ist.

9. Aufgabeförderer nach Anspruch 7 oder 8, dadurch gekennzeichnet, daß der Rechner (13′) der Steuereinrichtung (13) einen zweiten Vergleicher aufweist, mit dem bei Freiwerden der ersten Meßlinie (7) durch die Hinterkante des Stückgutteils (2) der vorhandene Zählerstand des zweiten Zählers (12) nacheinander mit zwei gespeicherten, systembedingten Bezugswerten zu vergleichen ist, deren Größe Einschalenlänge bzw. Zweischalenlänge entspricht, und daß der zweite Vergleicher ein entsprechendes Signal für die Steuereinrichtung des Aufnahmeförderers (3) erzeugt.

10. Aufgabeförderer nach einem oder mehreren der vorhergehenden Ansprüche, dadurch gekennzeichnet, daß der Taktgeber (10) für die Zähleinrichtung (11, 12) ein mit dem Fördertrum des Aufgabeförderers (1) zusammenwirkender Rotationsimpulsgeber ist.

11. Aufgabeförderer nach einem oder mehreren der Ansprüche 1 bis 9, dadurch gekennzeichnet, daß ein Taktgeber des Aufnahmeförderers (3) die Zähleinrichtung (11, 12) steuert.

## Claims

1. A feed conveyor (1) for feeding individual piece goods on to a free conveyor space on a receiving conveyor (3), more particularly a sorter in the form of a tilting pan conveyor or the like, of which the direction of advance (5) forms an acute angle of admittance to the direction of advance (8) of the feed conveyor, having an acceleration zone (17) which is at the delivery end of the feed conveyor and along which a piece goods item situated at a starting line (16) forming the beginning of the acceleration zone is to be accelerated to a predetermined transfer speed when a starting pulse emitter belonging to the receiving conveyor has emitted a starting pulse for the drive (6) of the feed conveyor, end having upstream of the acceleration zone a measuring zone for determining the length of the respective piece goods item and positioning the item at the starting line, the measuring zone being formed by a plurality of measuring lines (7, 9) such as light barriers or the like succeeding one another in the direction of conveyor advance and extending over the conveying path of the feed conveyor, which are connected to a control device (13) having a computer (13′), characterised in that the measuring zone is formed by two measuring lines (7, 9) extending at an acute angle ($\alpha$) to one another.

2. A feed conveyor as claimed in claim 1, characterised in that one measuring line (7) extends in a known manner at right angles to the direction (8) of advance of the feed conveyor (1).

3. A feed conveyor as claimed in claim 2, characterised in that the first measuring line (7), which is first reached by a piece goods item (2), extends at right angles to the direction (8) of advance of the feed conveyor (1).

4. A feed conveyor as claimed in one or more of the preceding claims, characterised in that one measuring line (9) extends in a known manner at right angles to the direction (5) of advance of the receiving conveyor (3).

5. A feed conveyor as claimed in claim 3 and 4, characterised in that the angle ($\alpha$) enclosed by the two measuring lines (7, 9) is equal to the angle ($\alpha$) of admittance between the directions (8, 5 respectively) of advance of the feed conveyor (1) and receiving conveyor (3).

6. A feed conveyor as claimed in one or more of the preceding claims, characterised in that the first measuring line (7), which is reached first by the leading edge of a piece goods item (2), co-operates with a counting device (11, 12) which is controlled by a clock (10) and which is switched on when the first measuring line (7) is reached by the item (2), and of which the count when the second measuring line (9) is reached by the item (2) is compared in the computer (13′) of the control device (13) with a preset comparative value; and the switching on of the drive (6) for the feed conveyor (1) after its activation by the starting pulse emitted by the receiving conveyor (3) can be delayed by a delay device according to the difference between the comparative value and the count when the second measuring line (9) is reached.

7. A feed conveyor as claimed in claim 6, characterised in that the counting device co-operating with the first measuring line (7) has two counters (11, 12) which are each controlled by a clock (10), and which are switched on respectively when the first measuring line (7) is reached by the leading edge of a piece goods item (2), one (the first) counter (11) being switched off when the second measuring line (9) is reached by the item (2) concerned and its count being stored in the computer (13'), and the second counter (12) emitting a stop pulse for the drive [(6) of the feed conveyor (1) when a preset count (Z15) is reached.

8. A feed conveyor as claimed in claim 7, characterised in that the control device (13) has a subtractor by means of which the difference between the preset final value (Z15) counted by the second counter (12) and the final value (Z9) established by the first counter (11) is determined when the second measuring line (9) is reached by the piece goods item (2), and the delay device for the drive (6) of the feed conveyor (1) is controlled by the subtractor.

9. A feed conveyor as claimed in claim 7 or 8, characterised in that the computer (13') of the control device (13) has a second comparator with which, when the first measuring line (7) is cleared by the trailing edge of the piece goods item (2), the current count of the second counter (12) is compared successively with two stored, system-defined reference values of which the magnitudes correspond to single-pan length and two-pan length, and the second comparator generates a corresponding signal for the control device for the receiving conveyor (3).

10. A feed conveyor as claimed in one or more of the preceding claims, characterised in that the clock (10) for the counting device (11, 12) is a rotary pulse emitter co-operating with the conveying run of the feed conveyor (1).

11. A feed conveyor as claimed in one or more of claims 1 to 9, characterised in that a clock for the receiving conveyor (3) controls the counting device (11, 12).

**Revendications**

1. Transporteur d'alimentation (1) destine à délivrer individuellement des charges individuelles de marchandise de détail à un emplacement de transport libre d'un transporteur de réception (3), notamment un transporteur de tri réalisé sous la forme d'un transporteur à bacs basculants ou analogue, dont la direction de transport (5) forme avec la direction de transport (8) du transporteur d'alimentation, un angle d'insertion aigu, comprenant, au niveau du tronçon d'extrémité du transporteur d'alimentation, situé côté évacuation, un parcours d'accélération (17) le long duquel une charge individuelle de marchandise de détail se trouvant au niveau d'une ligne de départ (16) constituant le début du parcours d'accélération, doit être accélérée à une vitesse de transfert prédéfinie, lorsqu'un générateur d'impulsions de départ du transporteur de réception a délivré une impulsion de départ pour le dispositif d'entraînement (6) du transporteur d'alimentation, l'ensemble comprenant également un parcours de mesure, situé en amont du parcours d'accélération, en se référant à la direction du transport, et destiné à déterminer dans chaque cas, la longueur de la marchandise de détail, ainsi qu'à positionner la charge individuelle de marchandise de détail sur la ligne de départ, le parcours de mesure étant constitué de plusieurs lignes de mesure (7, 9), telles que des barrières photoélectriques ou analogue, se succédant dans la direction de transport, s'étendant en travers de la voie de transport du transporteur d'alimentation, et reliées à un dispositif de commande (13) comportant un calculateur (13'), caractérisé en ce que le parcours de mesure est formé par deux lignes de mesure (7, 9) formant entre-elles un angle aigu (α).

2. Transporteur d'alimentation selon la revendication 1, caractérisé en ce qu'une ligne de mesure (7) s'étend, de manière connue en soi, perpendiculairement à la direction de transport (8) du transporteur d'alimentation (1).

3. Transporteur d'alimentation selon la revendication 2, caractérisé en ce que la première ligne de mesure (7) atteinte en premier lieu par une charge individuelle (2) de marchandise de détail, s'étend perpendiculairement à la direction de transport (8) du transporteur d'alimentation (1).

4. Transporteur d'alimentation selon l'une ou plusieurs des revendications précédentes, caractérisé en ce qu'une ligne de mesure (9) s'étend, de manière connue en soi, perpendiculairement à la direction de transport (5) du transporteur de réception (3).

5. Transporteur d'alimentation selon les revendications 3 et 4, caractérisé en ce que l'angle (α) que forment entre-eux les deux lignes de mesure (7, 9), est égal à l'angle d'insertion (α) entre les directions de transport respectives (8 et 5) du transporteur d'alimentation (1) et du transporteur de réception (3).

6. Transporteur d'alimentation selon l'une ou plusieurs des revendications précédentes, caractérisé en ce que la première ligne de mesure (7) atteinte en premier lieu par le bord avant d'une charge individuelle (2) de marchandise de détail, coopère avec un dispositif de comptage (11, 12) qui est commandé par une horloge (10), qui est déclenché lorsque la charge individuelle (2) de marchandise de détail a atteint la première ligne de mesure (7), et dont l'état de comptage, lorsque la charge individuelle (2) de marchandise de détail a atteint la seconde ligne de mesure (9), est comparé, dans le calculateur (13') du dispositif de commande (13) à une valeur de comparaison prédéfinie, et en ce que la mise en marche du dispositif d'entraînement (6) du transporteur d'alimentation (1), après son activation par l'impulsion de départ délivrée par le transporteur de réception (3), doit être retardée par un dispositif de temporisation, d'une valeur égale à la différence entre la valeur de comparaison et l'état de comptage lorsque la seconde ligne de mesure (9) est atteinte.

7. Transporteur d'alimentation selon la revendication 6, caractérisé en ce que le dispositif de comptage coopérant avec la première ligne de mesure (7) comprend deux compteurs (11, 12) commandés chacun par une horloge et déclenchés chacun lorsque le bord avant d'une charge individuelle (2) de marchandise de détail atteint la première ligne de mesure (7), un (le premier) compteur (11) étant arrêté lorsque la charge individuelle (2) de marchandise de détail considérée atteint la seconde ligne de mesure (9), et son état de comptage étant mémorisé dans le calculateur (13'), et le second compteur (12) délivrant, lorsqu'il atteint un état de comptage prédéfini (Z15), une impulsion d'arrêt pour le dispositif d'entraînement (6) du transporteur d'alimentation (1).

8. Transporteur d'alimentation selon la revendication 7, caractérisé en ce que le dispositif de commande (13) comporte un élément formant des différences, à l'aide duquel est formée la différence entre la valeur finale prédéfinie (Z15) comptée par le second compteur (12), et la valeur finale (Z9) déterminée par le premier compteur (11) lorsque la charge individuelle (2) de marchandise de détail a atteint la seconde ligne de mesure (9), et en ce que le dispositif de temporisation pour le dispositif d'entraînement (6) du transporteur d'alimentation (1), est commandé par l'élément de formation de différences.

9. Transporteur d'alimentation selon la revendication 7 ou 8, caractérisé en ce que le calculateur (13') du dispositif de commande (13) comporte un second comparateur, à l'aide duquel, lorsque le bord arrière de la charge individuelle (2) de marchandise de détail quitte la première ligne de mesure, l'état de comptage du second compteur (12), à cet instant, est comparé successivement à deux valeurs de référence mémorisées, liées au système, et dont la grandeur correspond à la longueur d'un bac ou de deux bacs, et en ce que le second comparateur délivre un signal correspondant pour le dispositif de commande du transporteur de réception (3).

10. Transporteur d'alimentation selon l'une ou plusieurs des revendications précédentes, caractérisé en ce que l'horloge (10) pour le dispositif de comptage (11, 12) est un générateur d'impulsions rotatif coopérant avec le brin de transport du transporteur d'alimentation (1).

11. Transporteur d'alimentation selon l'une ou plusieurs des revendications 1 à 9, caractérisé en ce qu'une horloge du transporteur de réception (3) commande le dispositif de comptage (11, 12).